# EUROPÄISCHE PATENTSCHRIFT

(11) **EP 0 614 551 B1**
(45) Veröffentlichungstag und Bekanntmachung des Hinweises auf die Patenterteilung: **26.08.1998**
(21) Anmeldenummer: 92923531.5
(22) Anmeldetag: 12.11.1992
(51) Int. Cl.: G06F 9/44

(54) **VERFAHREN ZUR STEUERUNG DER INTERAKTION EINER BEDIENEROBERFLÄCHE MIT EINER BEDIENERANWENDUNG**
PROCESS FOR CONTROLLING THE INTERACTION BETWEEN A USER INTERFACE AND AN APPLICATION
PROCEDE DE COMMANDE DE L'INTERACTION ENTRE UNE INTERFACE UTILISATEUR ET UNE APPLICATION

(30) Priorität: 29.11.1991 EP 91120524
(43) Veröffentlichungstag der Anmeldung: 14.09.1994
(73) Patentinhaber: SIEMENS AKTIENGESELLSCHAFT, 80333 München (DE)
(72) Erfinder: SEVCIK, Maximilian, Dipl. Ing., D-81379 München (DE)
(86) Internationale Anmeldenummer: EP9202605
(87) Internationale Veröffentlichungsnummer: WO9311483

(56) Entgegenhaltungen:
- IEE COLLOQUIUM ON USER INTERFACE MANAGEMENT SYSTEMS, DIGEST. Nr. 135, 17. November 1989, LONDON, GB Seiten 6.1 - 6.5 P.D. GRAY 'INTERACTIVE USER INTERFACE DESIGN: THE CHIMERA UIMS'
- PATENT ABSTRACTS OF JAPAN vol. 013, no. 314 (P-899) 18. Juli 1989 & JP-A-01 084 322 ( HITACHI LTD ) 26. Maerz 1989
- TELECOMMUNICATIONS AND RADIO ENGINEERING. Bd. 43, Nr. 11, November 1988, NEW YORK, NY, US Seiten 16 - 19 M.A. APPAK 'THE TECHNOLOGY OF THE DEVELOPMENT AND DESIGN OF AUTOMATED WORK STATIONS'
- IEEE COMMUNICATIONS MAGAZINE. Bd. 26, Nr. 3, M rz 1988, NEW YORK, NY, US Seiten 14 - 20 D.H. SONNENWALD 'APPLYING ARTIFICIAL INTELLIGENCE TECHNIQUES TO HUMAN-COMPUTER INTERFACES'
- ANGEWANDTE INFORMATIK. APPLIED INFORMATICS. Bd. 31, Nr. 7, Juli 1989, WIESBADEN, DE Seiten 294 - 301 D. BAUER ET AL. 'EINSATZ EINER ANWENDUNGSNEUTRALEN BENUTZERSCHNITTSTELLE IN EINER B]ROANWENDUNG ALS BEISPIEL F]R WISSENSBASIERTE MENSCH-COMPUTER-KOMMUNIKATION'
- TELCOM REPORT. Bd. 14, Nr. 5, September 1991, MUNCHEN, DE Seiten 270 - 273 G. BOGLER ET AL. 'TELEKOMMUNIKATIONSNETZE EFFEKTIV MANAGEN'

## Beschreibung

Die Erfindung betrifft ein Verfahren zur Steuerung der Interaktion eines Bedieners mit einer Bedieneranwendung, das insbesondere auf dem Gebiet eines telecommunication management network in öffentlichen und privaten Kommunikationsnetzen angewandt werden kann.

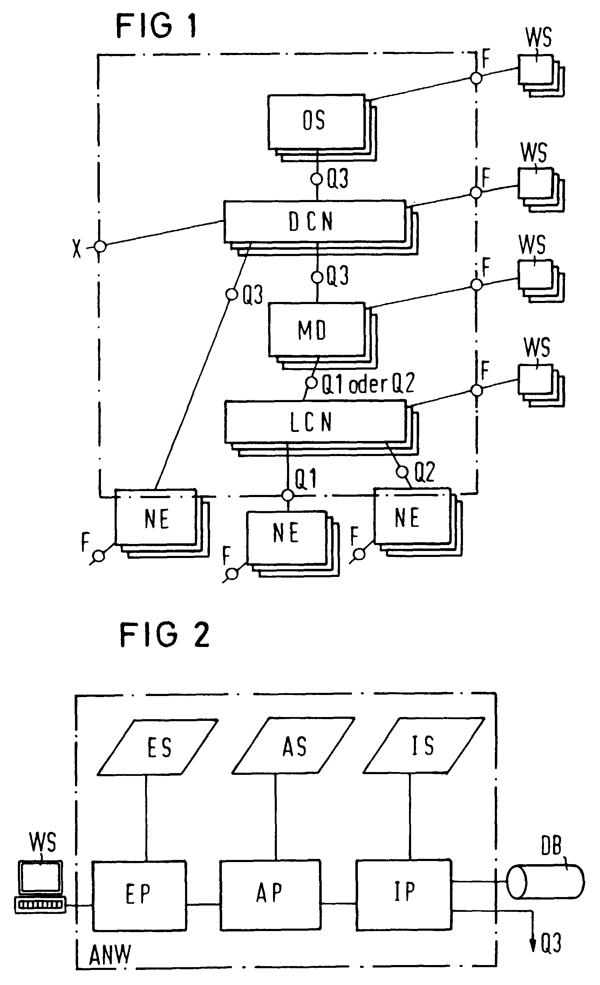

FIG 1 zeigt ein Referenzmodell eines telecommunication management networks TMN gemäß CCITT recommendation M.30. Das telecommunication management network hat die Aufgabe, die in Netzelementen NE des Telecommunicationsnetzes anfallenden OAM-Meldungen (OAM heißt operations, administration, maintenance, also Betrieb, Verwaltung,Wartung) zum operation system OS des telecommunication management network zu transportieren. Im operation system werden die OAM-Meldungen verknüpft und ausgewertet und führen schließlich zu OAM-Befehlen, welche wiederum an die Netzelemente (network elements) ausgegeben werden. Das operation system verfügt hierzu über die notwendigen Programme und Datenbänke und unterstützt darüber hinaus workstations WS als Bedienergeräte für das Wartungspersonal.

Die network elements haben unterschiedliche Mächtigkeit. Ein network element kann beispielsweise ein ganzes komplexes Vermittlungssystem umfassen oder auch nur einen relativ einfachen Multiplexer. Um dem operation system OS einigermaßen gleich konsistente Daten anbieten zu können, sind zur Vorverarbeitung der Meldungen von "einfachen" network elements sogenannte mediation devices MD vorgesehen. Zum Vorverarbeiten und Verdichten der Informationen gehört z.B. das Sammeln und Aufbereiten der Meldungen von einfachen network elements, die Feststellung von Grenzwertüberschreitungen usw., also insgesamt Funktionen, die ein komplexes network element (wie z.B. ein ganzes Vermittlungssystem) selbständig ausführt.

Einfache network elements sind über local communication networks LCN und Schnittstellen Q1 oder Q2 mit den mediation devices verbunden. Komplexe network elements und mediation devices erreichen das operation system über data communication networks DCN und Schnittstellen Q3. Weiterhin gibt es noch Schnittstellen F zu den workstations der Bediener und Schnittstellen X zu anderen Netzen (auch anderen telecommunication management networks).

Die Bediener-Interaktion (z.B. die Abfolge von Ein-/Ausgabeformularen) an den am operating system angeschlossenen workstations muß anwenderspezifisch in Abhängigkeit von den jeweiligen TMN- Funktionen (z.B. Verwaltung von Teilnehmerdaten) und unter Verwendung der via Q3-Schnittstellen angebotenen Daten (abhängig vom jeweiligen Netzelement NE) definiert und implementiert werden.

Standardisierungsgremien sind bestrebt, elementare Funktionen der Bedienerschnittstellen im telecommunication management network einheitlich zu definieren. Dabei werden bestimmte statische Funktionen (z.B. menue-selection, Icons, Formulare, Ein-/ Ausgabe-Fenster etc.) nach ergonomischen Gesichtspunkten festgelegt. Ihre Realisierung in einen operating system bzw. einer workstation erfolgt mit bekannter Technik unter Verwendung von Industrie-Standards wie z.B. X-Windows.

Dynamische Eigenschaften (z.B. die zeitliche Abfolge der Eingabe-Formulare, Erzeugung von Ausgabedaten) sind weitgehend durch die jeweiligen Bedieneranwendungen im operation system (operation system functions) bestimmt. Ihre Änderung (z.B. Anpassung an spezifische Anforderungen eines Netzbetreibers) impliziert Software-Änderungen in den Bedieneranwendungen. Um die Adaptierbarkeit zu erleichtern, wurden mehrere Konzepte erarbeitet, welche aie Funktionen der Bedieneroberfläche von den Bedieneranwendungen trennen.

Aus dem Artikel "Einsatz einer anwendungsneutralen Benutzerschnittstelle in einer Büroanwendung als Beispiel für wissensbasierte Mensch-Computer-Kommunikation von D. Bauer et al. in der Zeitschrift "Angewandte Informatik, Bd. 31, Nr. 7, Juli 1989, Wiesbaden, DE, Seiten 294-301 ist bekannt, daß sowchl eine Bedieneranwendung, als auch eine Bedienerschnittstelle mit Hilfe objektorientierter Programmierung realisiert werden können.

Aus dem Artikel "Applying Artificial Intelligence Techniques to Human-Computer Interfaces" von D.H. Sonnenwald, in der Zeitschrift IEE Communications Magazine, Band 26, Nr. 3, März 1988, New York, NY, US, Seiten 14-20, ist eine Bedienerschnittstelle bekannt, die von der Bedieneranwendung Bedienerführungsinformationen in Form von sogenannten VUI-Botschaften empfängt und deren Darstellung gegenüber dem Bediener steuert.

Aus dem Artikel "Interactive User Interface Design: the Chimera UIMS" von P. D. Gray, in der Zeitschrift IEE Colloquium on User Interface Management Systems, Digest, Nr. 135, 17. November 1989, London, GB, Seiten 6.1-6.5 ist eine Bedienerschnittstelle bekannt, die einen Interpreter enthält, der eine Schnittstellenbeschreibung in Chisl lesen kann und aufgrund unterschiedlicher Schnittstellenbeschreibungen unterschiedliche Schnittstellen realisieren kann.

Ein für das telecommunication management network relevantes Beispiel wird von CCITT study group X, Contribution 14, October 90 (im folgenden abgekürzt als ComX14 bezeichnet) als improved Human-Machine Intert'ace specification technique zur Anwendung empfohlen.

Die Specifikation von Bedieneranwendungen erfolgt dabei nach einem 3-Schichten-Modell gemäß FIG 2.

Die Internal Schemata IS beschreiben Datenzugriffsobjekte (z.B. Streams) auf bedienbare Objekte (managed objects) wie z.B. Teilnehmer, die mit Hilfe der Datenzugriffsobjekte in einer Datenbasis DB und/oder den bedienbaren Netzelementen (erreichbar via Q3/Schnittstelle, DCN; siehe FIG 1) abgelegt sind. Die entsprechenden Datenzuzgriffsfunktionen werden als internal processes IP realisiert.

Application schemata AS beschreiben die Strukturierung der (TMN-) Bedienetanwendungen bzw. der bedienbaren Objekte in einer Baumstruktur. Ein Beispiel für eine Bedieneranwendung ist die Bedienung von Teilnehmern, die in den application Schemata in Teilfunktionen aufgespalten wird, z.B, in eine Teilfunktion, "Bedienung von Analog-Teilnehmern" und eine Teilfunktion "Bedienung von ISDN-Teilnehmern".

Application processes AP realisieren die Bedieneranwendungen mit ihren Teilfunktionen indem sie mit internal process Nachrichter über die bedienbaren Objekte in den internal schemata austauschen (Bsp.: Die Teilfunktion Bedienung von ISDN-Teilnehern schafft via einen Internal Process die Daten des Teilnehmer-Ports im relevanten Netzelement/Vermittler).

External schemata ES und external processes EP steuern die konkrete Datendarstellung an der workstation, z.B. indem entsprechende Bedienerformulare, Meldungen, etc. angezeigt werden. Diese Funktionen einer Bedieneroberfläche werden hier nicht näher betrachtet, da entsprechende Lösungen als Industrie-Standards bekannt sind.

Bei der Definition von Application Schemata muß neben der in FIG 2 gezeigten Strukturierung auch eine Reihe von Zusatzvereinbarungen getroffen werden.

Beispiele:
1) Datendefinitionen (z.B. Teilnehmer-Rufnummer)
2) Abhängigkeiten zwischen den Daten (Semantik); Beispiel: Ein Analog-Teilnehmer kann keinen Fax Gruppe 4- Dienst beanspruchen
3) Operationen auf den definierten Daten (Abfragen, Änderungen, Erzeugen, Löschen)
4) Abhängigkeiten zwischen den Operationen (eine Abfrage der Daten eines gelöschten Teilnehmers führt zu einem Fehler).

Aus diesen Gründen wurden für die Definition von Application Schemata von ISO, CCITT, ETSI formale objektorientierte Beschreibungsmethoden empfohlen (ComX14). Für die formale Beschreibung werden normierte Notationen verwendet (CCITT Recommendation X. 722). Ein schematisches Beispiel verdeutlicht die wesentlichen Zusammenhänge in dieser Notation:

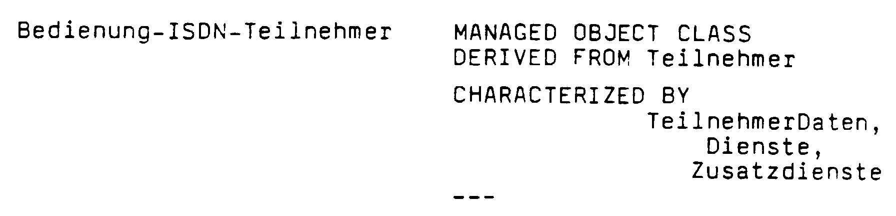

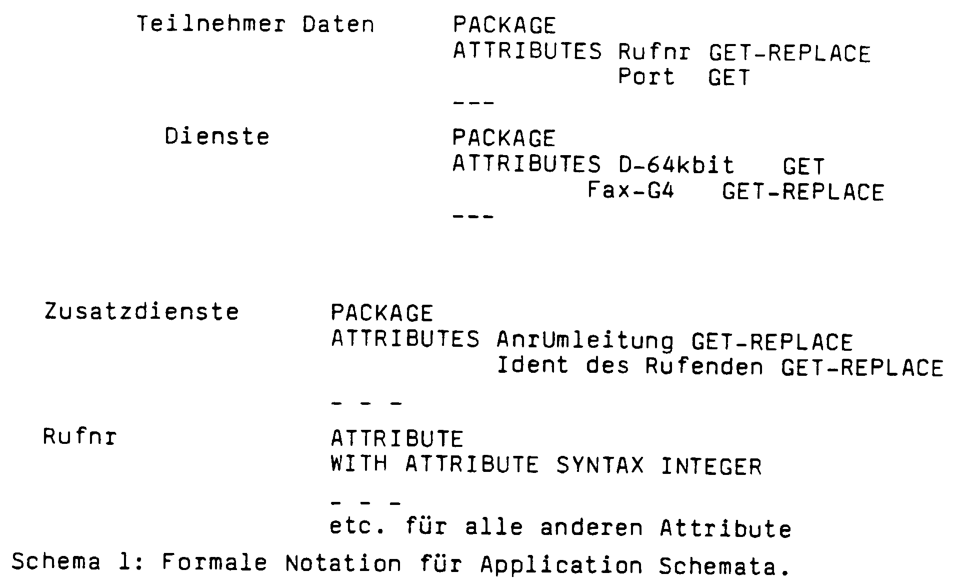

Das Beispiel eines Application Schemas in der Notation gemäß Schema 1 beschreibt für eine Teilfunktion (Bedienung ISDN- Teilnehmer) die relevanten Daten (Attribute) und die auf diesen Daten ausführbaren Operationen (Bsp.: GET, REPLACE). Die Daten von bedienbaren Objekten und die auf diesen Daten ausführbaren Operationen können in logische Gruppen (PACKAGE) zusammengefaßt werden.

Die ablaufbedingten Abhängigkeiten zwischen Operationen und den Daten werden durch die Implementation der jeweiligen Operationen in den Application Processes berücksicht. Hierzu gehört auch das Verhalten gegenüber den External Processes, d.h. gegenüber der Bedieneroberfläche.

Ein entscheidender Nachteil dieser Technik besteht in der erschwerten Adaptierbarkeit für neue (Teil-)Funktionen bzw. bei heterogenen Netzelementen. Jede Änderung der ablaufbedingten Abhängigkeiten führt zu schwer überschaubaren Programmanpassungen.

Der Erfindung liegt das Problem zugrunde, den genannten Nachteil zu überwinden.

Dieses Problem wird durch die Merkmale des Anspruchs 1 gelöst.

Mit dem erfindungsgemäßen Interpreter, der die Benutzerführungsinformationen aus dem objektorientierten Formalismus zur Beschreibung der bedienbaren Objekte ableitet, ist ein eigenständiger Prozeß vorhanden, der ausschließlich der Erzeugung der Benutzerführungsinformationen und deren Weiterleitung an die Benutzeroberfläche dient. Änderungen im Applications-Schema, z. B. wenn neue Netzelemente ins bestehende Telecommunication Management Network integriert werden, können weitgehend kongruent auf die Bedieneroberfläche abgebildet werden. Somit kann das Telecommunication Management Network heterogene Netzelemente bedienen.

Eine Ausführungsform der Erfindung gemäß Anspruch 2 besitzt insbesondere den Vorteil, daß die Bildung der Benutzerführungsinformationen dynamisch in Abhängigkeit der in einem bedienbaren Objekt abgespeicherten Werte seiner Attribute durchgeführt werden kann. Änderungen bezüglich der ablaufbedingten Abhängigkeiten einer Bedieneranwendung führen nunmehr nicht mehr zu schwer überschaubaren Programmanpassungen in der eigentlichen Bedieneranwendung.

Im folgenden wird ein spezielles Ausführungsbeispiel der Erfindung unter Zuhilfenahme der Zeichnung näher erläutert.

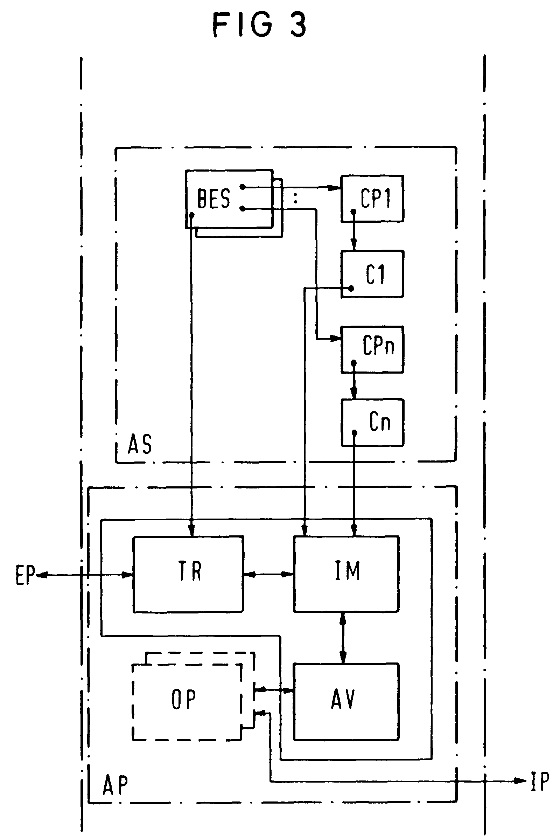

FIG 3 zeigt eine erfindungsgemäße Funktionsstruktur zur dynamischen Erzeugung der Bedienerführungsinformationen.

Die erfindungsgemäße Anordnung ist Teil der vorher genannten Application Processes AP und umfaßt einen Interpreter TR, einen Inferenzmechanismus IM und einen Objektspeicher AV.

Der Interpreter TR dient der Erzeugung von relevanten Bedienerführungsinformationen (Attribute eines bedienbaren Objekts und darauf zugelassene Operationen) und zu deren Weiterleitung an vorher genannte External Processes EP. Die genannte Erzeugung erfolgt durch Interpretation eines objektorientierten Formalismus BES, der eine formale Beschreibung (Definition) der Bedienung eines bestimmten Typs eines bedienbaren Objekts darstellt. Bei dem objektorientierten Formalismus handelt es sich um den Definitionen-Teil im objektorientierten Quellcode einer Bedieneranwendung.

Der Inferenzmechanismus IM dient der Evaluation (Verifikation) der genannten Konditionen, wobei die Evaluation nach jedem Interaktionsschritt zwischen der Bedieneroberfläche und der Bedieneranwendung erfolgt und gemäß einem später noch erläuterten Deduktionsprozeß erfolgt. Das Ergebnis der Evaluation wird nach jedem Interaktionsschritt an den Interpreter TR übergeben.

Der Objektverwalter AV dient zur Verwaltung der im Zuge einer Bedieneranwendung bzw. eines Interaktionsschrittes einer Bedieneranwendung angeforderten bzw. veränderten Werte von Attributen bedienbarer Objekte sowie auch der zur Festlegung der Konditionen benötigten Daten.

Durch die erfindungsgemäße Anordnung ist die Implementation von Operationen OP einer Bedieneranwendung unabhängig vom Mechanismus zur Erzeugung von Bedienerführungsinformationen.

Eine Ausführungsform des obengenannten Formalismus BES, der eine dynamische Bildung von Benutzerführungsinformationen ermöglicht, wird im folgenden anhand Schema 2 angegeben.

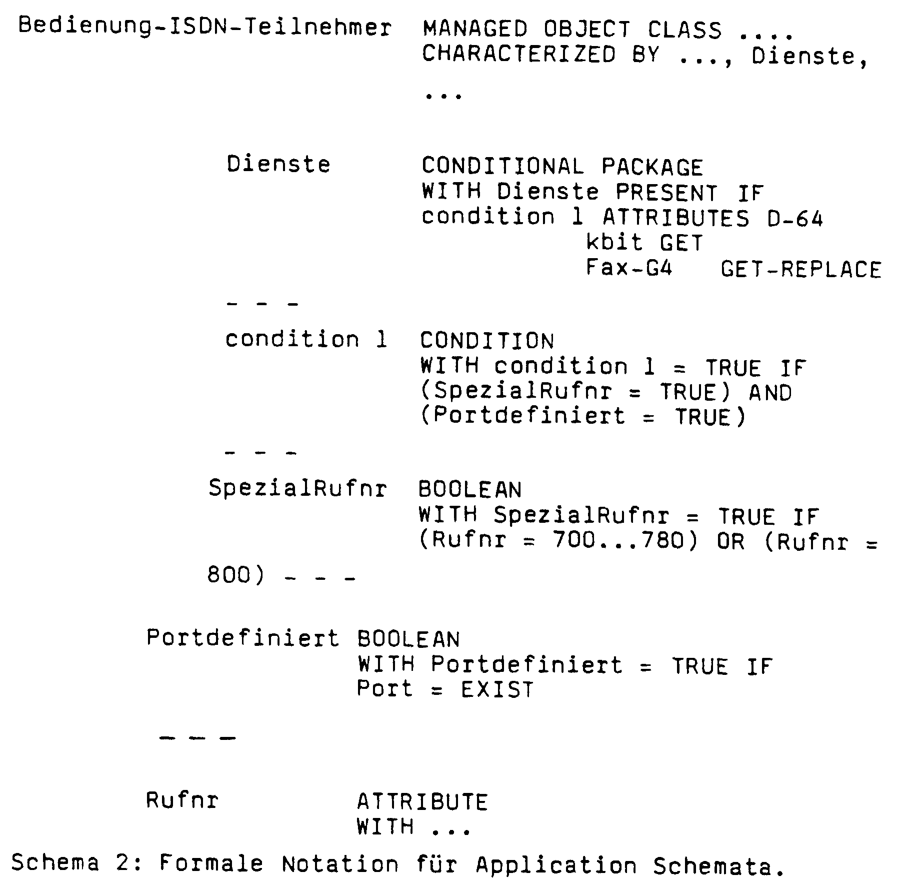

Schema 2 ist gegenüber Schema 1 um sogenannte Conditional Packages (CPl, ..., CPn; FIG 3) erweitert worden. Durch diese Conditional Packages werden Konditionen (Cl, ... Cn; FIG 3) bezüglich der Attribute eines Conditional Package beschrieben, deren Erfüllung durch eine Instanz eines bedienbaren Objekts die Voraussetzung dafür ist, daß die bezüglich dieser Instanz gebildeten Bedienerführungsinformation auch die Attribute und Operationen des genannten Conditional Package umfassen.

Ein formales Regelsystem entsprechend den genannten Conditional Packages ist z.B. aus der Programmiersprache PROLOG bekannt. Eine Kondition gilt als erfüllt (Condition = TRUE), wenn der Deduktionsprozeß (Top down Inference Mechanism) das Resultat "TRUE" liefert. Die Ausdrücke im Regelsystem sind aus den Attributen der formalen Beschreibung eines Typs eines bedienbaren Objekts zusammengesetzte bool'sche Ausdrücke. Das bedeutet, daß Condition 1 gemäß Schema 2 bei einer Instanz eines bedienbaren Objekts dann als erfüllt gilt, wenn der Wert des Attributs "Rufnr" die Bedingung der "Spezial Rufnr" erfüllt und der logische Wert des Attributs "Port" einen aus der früheren Interaktion vorbelegten Wert hat.

Attribute von Conditional Packages können während der Ausführung von Operationen vom System oder durch Bedienereinwirkung mit neuen Werten versehen werden, so daß die logische Abfolge der künftigen Interaktionsschritte dynamisch durch neue Evaluation (Verification) der vorgegebenen Konditionen gesteuert werden kann.

Nach Ausführung jeder Operation (z.B. GET, REPLACE, siehe Schema 2) werden alle Konditionen neu evaluiert, bzw. verifiziert. Diejenigen Operationen und Attribute einer Instanz eines bedienbaren Objekts, für welche cie Konditionen nach der Evaluation "TRUE" waren, werden dem Bediener als Bedienerführungsinformationen für den neuen Interaktionsschritt angeboten. Dieser Schritt wird nach jeder Bedienerinteraktion wiederholt.

Der Ablauf der Bedienerinteraktion bei einer Bedieneranwendung ist also grundsätzlich durch die Reihenfolge der Packages im Application Schema vorgegeben, wird jedoch durch die Einführung von Conditional Packages dynamisch modifiziert.

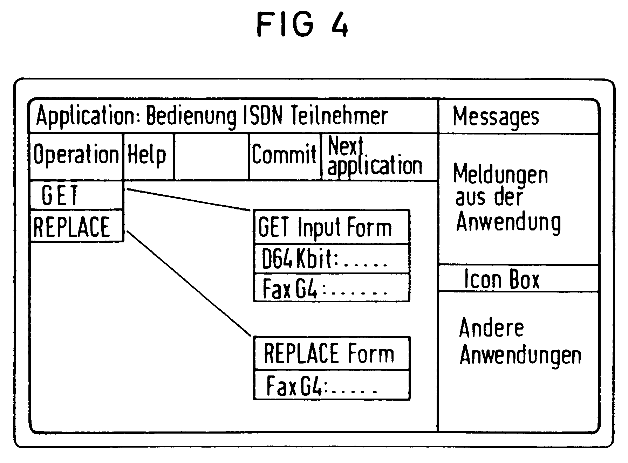

Ein fiktives Beispiel einer Bedieneroberfläche für die Anzeige von dynamisch ausgewählten Bedienerführungsinformationen nach der Evaluation "Condition 1 = TRUE" ist in FIG 4 gezeigt, d.h. die Operationen und Attribute des Conditional Package "Dienste" (siehe Schema 2) werden zur Auswahl angeboten.

Es folgt eine Erläuterung zu den Bedienerführungsinformationen in Fig. 4.

"Application" bedeutet die aktuelle Bedieneranwendung bzw. der aktuelle Typ des bedienbaren Objekts.
"Commit" bedeutet den Befehl zur Ausführung von Operationen der aktuellen Bedieneranwendung.
"Next application" bedeutet die Auswahl der nächsten Anwendung bzw. des nächsten Typs eines bedienbaren Objekts.
"Get" bedeutet die Abfrage der Attribute des Package "Dienste" über ein entsprechendes Eingabeformular (GET INPUT FORM). REPLACE bedeutet das Ersetzen von Attributen des Package "Dienste" über ein entsprechendes Eingabeformular (REPLACE FORM).

## Patentansprüche

1. Verfahren zur Steuerung der Interaktion einer Bedieneroberfläche mit einer Bedieneranwendung, demgemäß
a) aufgrund einer Anforderung durch die Bedieneroberfläche Bedienerführungsinformationen bezüglich der Bedieneranwendung gebildet werden,
b) die Bedienerführungsinformationen nach ihrer Bildung an die Bedieneroberfläche zum Zwecke der Anzeige übergeben werden,
c) die Struktur einer Bedieneranwendung mit Hilfe eines objektorientierten Formalismus beschrieben wird,
**dadurch gekennzeichnet,** daß
d) die Bedienerführungsinformationen mit Hilfe eines in der Bedieneranwendung enthaltenen Interpreters (TR) aus dem genannten Formalismus abgeleitet werden.

2. Verfahren gemäß Anspruch 1,
**dadurch gekennzeichnet,** daß durch den genannten Formalismus auch Konditionen bezüglich der Attribute eines bedienbaren Objekts festgelegt werden, nur solche Bedienerführungsinformationen gebildet und der Bedieneroberfläche übergeben werden, die Attribute beschreiben, deren Werte die festgelegten Konditionen erfüllen.

3. Verfahren gemäß Anspruch 2,
**dadurch gekennzeichnet,** daß die genannten Konditionen von einer speziellen Bedieneranwendung vorgegeben werden.

4. Verfahren gemäß Anspruch 2 oder 3,
**dadurch gekennzeichnet,** daß die genannten Konditionen durch das System vorgegeben sind.

5. Bedienerschnittstelle zur Steuerung der Interaktion einer Bedieneroberfläche mit einer Bedieneranwendung, die
a) aufgrund einer Anforderung durch die Bedieneroberfläche Bedienerführungsinformationen bezüglich der Bedieneranwendung bildet,
b) die Bedienerführungsinformationen nach ihrer Bildung an die Bedieneroberfläche zum Zwecke der graphischen Darstellung übergibt,
**dadurch gekennzeichnet,** daß
c) die Bedienerschnittstelle die Bedienerführungsinformationen mit Hilfe eines in der Bedieneranwendung enthaltenen Interpreters (TR) aus der mit Hilfe eines objektorientierten Formalismus implementierten Strukturbeschreibung der Bedieneranwendung ableitet.

6. Bedienerschnittstelle nach Anspruch 5,
**dadurch gekennzeichnet,** daß
a) durch den genannten objektorientierten Formalismus auch Konditionen bezüglich der Attribute eines bedienbaren Objekts festgelegt werden können,
b) die Bedienerschnittstelle einen Inferenzmechanismus (IM) umfaßt, der die mit Hilfe des objektorientierten Formalismus festgelegten Konditionen verifiziert und das Ergebnis der Verifikation nach jedem Interaktionsschritt dem Interpreter übergibt,
c) der Interpreter Bedienerführungsinformationen bezüglich der konditionierten Attribute nur dann der Bedieneroberfläche übergibt, wenn das Ergebnis der genannten Verifikation positiv war.

## Claims

1. Method for controlling the interaction of an user interface with an operator application, according to which
a) operator guidance information relating to the operator application is formed on the basis of a requirement by the user interface,
b) once it has been formed, the operator guidance information is transferred to the user interface for the purpose of display,
c) the structure of an operator application is described with the aid of object-oriented formalism,
characterized in that
d) the operator guidance information is derived from the said formalism with the aid of an interpreter (TR) which is contained in the operator application.

2. Method according to Claim 1,
characterized in that the said formalism is also used to define conditions relating to the attributes of an operable object, and only those operator guidance information items which describe attributes whose values satisfy the defined conditions are formed and transferred to the user interface.

3. Method according to Claim 2,
characterized in that the said conditions are predetermined by a specific operator application.

4. Method according to Claim 2 or 3,
characterized in that the said conditions are predetermined by the system.

5. Operator interface for controlling the interaction of an user interface with an operator application, which
a) forms operator guidance information relating to the operator application on the basis of a requirement by the user interface,
b) once it has been formed, transfers the operator guidance information to the user interface for the purpose of graphic display,
characterized in that
c) the operator interface derives the operator guidance information from the structure description (which is implemented with the aid of object-oriented formalism) of the operator application with the aid of an interpreter (TR) which is included in the operator application.

6. Operator interface according to Claim 5,
characterized in that
a) conditions relating to the attributes of an operable object can also be defined by the said object-oriented formalism,
b) the operator interface comprises an inference mechanism (IM) which verifies those conditions which are defined with the aid of the object-oriented formalism and, after each interaction step, transfers the result of the verification to the interpreter,
c) the interpreter transfers operator guidance information items relating to the conditioned attributes to the user interface only if the result of the said verification was positive.

## Revendications

1. Procédé de commande de l'interaction entre une interface utilisateur et une application selon laquelle
a) en raison d'une demande provenant de l'interface utilisateur, sont formulées des informations destinées à guider l'opérateur et relatives à l'application,
b) après leur formulation, les informations destinées à guider l'opérateur sont transmises à l'interface utilisateur en vue de leur édition,
c) la structure de l'application est décrite à l'aide d'un formalisme orienté sur l'objet,
**caractérisé par le fait**
d) que les informations destinées à guider l'opérateur sont déduites du dit formalisme à l'aide d'un interprète (TR) contenu dans l'application.

2. Procédé conforme à la revendication 1,
**caractérisé par le fait**
que, par le formalisme cité, sont aussi déterminées des conditions relatives aux attributs d'un objet contrôlable et que seules sont formulées et transmises à l'interface utilisateur des informations destinées à guider l'opérateur qui décrivent des attributs dont les valeurs satisfont aux conditions fixées.

3. Procédé conforme à la revendication 2,
**caractérisé par le fait**
que les conditions citées sont prédéterminées par une application spéciale.

4. Procédé conforme à la revendication 2 ou 3,
**caractérisé par le fait**
que les conditions citées sont prédéterminées par le système.

5. Interface opérateur pour la commande de l'interaction entre une interface utilisateur/système et une application, lequel
a) formule, en raison d'une demande provenant de l'interface utilisateur, des informations destinées à guider l'opérateur,
b) transmet, après leur formulation, les informations destinées à guider l'opérateur à l'interface utilisateur en vue de leur édition graphique,
**caractérisé par le fait**
c) que l'interface opérateur déduit, à l'aide d'un interprète (TR) contenu dans l'application, les informations destinées à guider l'opérateur de la description de structure de l'application implémentée à l'aide d'un formalisme axé sur l'objet.

6. Interface opérateur selon la revendication 5,
**caractérisé par le fait**
que
a) par le dit formalisme axé sur l'objet, peuvent également être fixées des conditions relatives aux attributs d'un objet contrôlable,
b) l'interface opérateur comprend un mécanisme d'interférence (IM), qui vérifie les conditions fixées à l'aide du formalisme axé sur l'objet et transmet, après chaque étape d'interaction, le résultat de la vérification à l'interprète,
c) l'interprète ne transmet à l'interface utilisateur les informations destinées à guider l'opérateur, relatives aux attributs conditionnés, que si le résultat de la dite vérification est positif.
